# FASCICULE DE BREVET EUROPEEN

(11) **EP 2 910 826 B1**
(45) Date de publication et mention de la délivrance du brevet: **22.11.2017**
(21) Numéro de dépôt: 15305152.9
(22) Date de dépôt: 02.02.2015
(51) Int. Cl.: F16K 5/06, F16K 5/20

(54) **Vanne à boisseau sphérique rotatif et son procédé de fabrication**
Drehbarer Kugelhahn und sein Herstellungsverfahren
Rotatable ball valve and method for manufacturing same

(30) Priorité: 31.01.2014 FR 1400261
(43) Date de publication de la demande: 26.08.2015
(73) Titulaire: Sogefi Air & Cooling (SAS), 78280 Guyancourt (FR)
(72) Inventeur: Becker, Nicolas, 68000 COLMAR (FR); Deletang, Romain, 88600 AYDOILLES (FR); Floranc, Alexandre, 68280 Logelheim (FR); Moreau, Fabien, 68370 ORBEY (FR)
(74) Mandataire: Nuss, Laurent

(56) Documents cités:
- EP-A1- 1 529 937
- WO-A2-97/04257
- AU-B2- 439 927
- DE-A1- 4 235 723
- DE-A1-102009 014 047
- US-A- 2 039 220
- US-A1- 2003 111 631
- US-A1- 2011 240 898
- US-A1- 2011 266 481

## Description

La présente invention concerne le domaine des dispositifs de régulation de la circulation de fluide, plus particulièrement les vannes proportionnelles ou tout ou rien, et a pour objet une vanne à boisseau rotatif et son procédé de fabrication.

De nombreuses constructions de vannes à boisseau rotatif sont déjà connues.

Lorsque les boisseaux mis en oeuvre présentent une forme sphérique, l'un des enjeux technologiques majeurs, pour lequel il est souvent difficile de trouver une solution performante et fiable, est la réalisation de l'étanchéité au niveau des ouvertures, plus particulièrement entre les ouvertures d'entrée souvent soumises aux pressions élevées et la surface du boisseau.

Par les documents EP 1 529 937, EP 2 052 177, US 6 499 720 et DE 10 2009 014 047 notamment, on connaît déjà des dispositifs d'étanchéité composites permettant d'assurer une bonne étanchéité avec le boisseau du fait de la présence d'un moyen de précontrainte élastique sollicitant le moyen d'étanchéité (bague) contre le boisseau.

Parmi ces dispositifs connus, seul celui divulgué par le document DE 10 2009 014 047 fait également état d'une étanchéité spécifique par rapport au corps de vanne, c'est-à-dire entre le dispositif d'étanchéité lui-même et l'ouverture dans laquelle ce dernier est monté, donc entre l'intérieur de l'ouverture et l'intérieur de la chambre recevant le boisseau.

Toutefois, dans la construction proposée par ce dernier document DE, ainsi que dans les solutions proposées par les autres documents précités, le fluide, présent au niveau de l'ouverture d'entrée, exerce une pression importante sur le moyen d'étanchéité, lequel vient en appui avec une contrainte de pression élevée sur le boisseau.

Il est donc nécessaire de disposer d'un couple élevé pour déplacer le boisseau et donc commander la vanne.

Un actionneur de puissance suffisante doit, par conséquent, être prévu, entraînant des coûts de revient et d'utilisation (énergie et usure) élevés.

Les mêmes inconvénients peuvent être relevés en relation avec les documents US 2003/0111631 et US 2011/0266481.

L'impact négatif de ces inconvénients est encore augmenté lorsque la vanne fait partie d'un système embarqué.

De plus, la transmission du couple entre l'actionneur et le boisseau doit, du fait de sa valeur élevée, se faire par le biais d'une liaison rigide et figée avec l'axe de ce dernier.

La présente invention a notamment pour but de proposer une solution surmontant ces inconvénients.

A cet effet, l'invention a pour objet une vanne à boisseau rotatif selon le préambule de la revendication 1 et présentant en combinaison les caractéristiques de la partie caractérisante de cette revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une vue éclatée d'une vanne à boisseau selon un mode de réalisation de l'invention, sous forme d'une vanne à une entrée et à une sortie ;
Les figures 2A et 2B sont des vues partielles en coupe, selon un plan contenant l'axe de rotation du boisseau et l'axe central de l'ouverture d'entrée, de la vanne représentée figure 1, respectivement à l'état fermé et à l'état ouvert ;
La figure 3 est une vue à une échelle différente de la région de l'ouverture d'entrée et d'une partie du boisseau de la vanne représentée figure 2B ;
La figure 4 est une vue à une échelle différente du détail B de la figure 3 ;
La figure 5 est une vue identique à celle de la figure 4, illustrant une variante de réalisation de l'ensemble corps annulaire/bague de renfort ;
La figure 6 est une représentation similaire à celle de la figure 4, illustrant symboliquement l'application de la pression d'entrée (amont) et de la pression intérieure ou de sortie (aval) sur le dispositif d'étanchéité composite (à l'état fermé du boisseau) ;
Les figures 7A et 7B représentent schématiquement en coupe une vanne à boisseau sphérique à une entrée et une sortie, pourvu d'un dispositif d'étanchéité selon l'invention, respectivement en position ouverte et fermée ;
Les figures 8A, 8B et 8C représentent schématiquement en coupe, dans trois positions différentes du boisseau, une vanne à boisseau sphérique à deux entrées et à une sortie, chaque entrée étant pourvue d'un dispositif d'étanchéité composite selon l'invention ;
Les figures 9A, 9B, 9C et 9D représentent schématiquement en coupe, dans quatre positions différentes du boisseau, une vanne à boisseau double à deux entrées et une sortie, chaque entrée étant munie d'un dispositif d'étanchéité composite selon l'invention, et,
La figure 10 est une vue de dessus et en coupe d'un module fonctionnel pour circuit de refroidissement d'un véhicule à moteur à combustion interne, comprenant une vanne à boisseau selon l'invention, associée à une pompe.

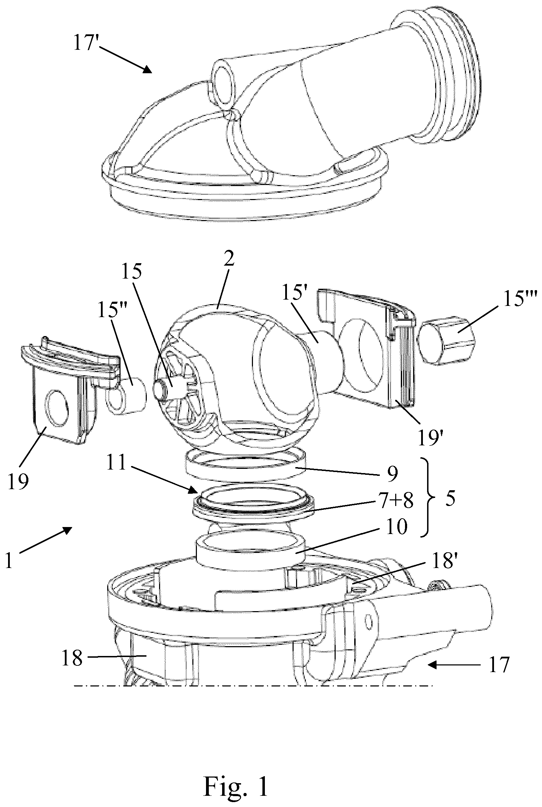

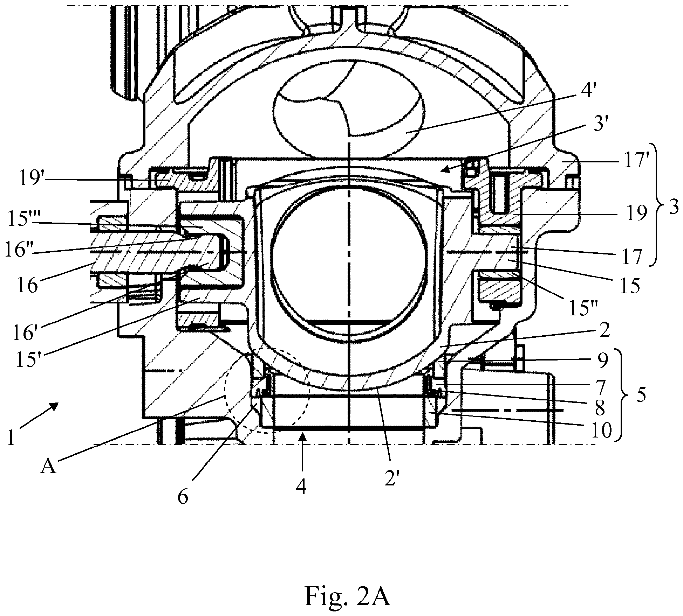

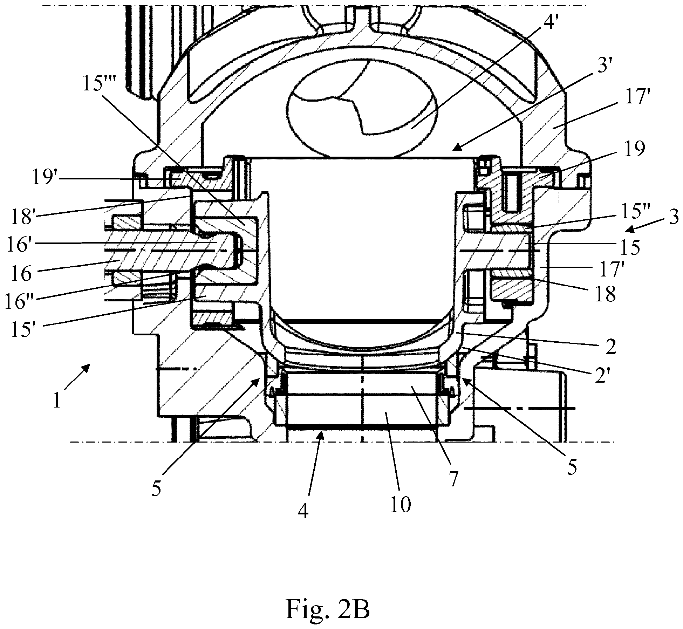

Les figures 1 et 2 illustrent une vanne 1 à boisseau rotatif 2 selon l'invention.

Cette dernière comprend un corps de vanne creux 3, muni d'au moins une ouverture d'entrée 4 et d'au moins une ouverture de sortie 4' et définissant une chambre de réception 3' pour le boisseau 2, ce dernier présentant une surface extérieure sphérique, au moins au niveau de la ou des portion(s) 2' de surface extérieure venant en regard de la ou des ouverture(s) d'entrée 4 dans l'une quelconque des positions rotatoires possibles dudit boisseau 2.

Ladite vanne 1 comporte également au moins un dispositif d'étanchéité composite 5, installé coaxialement dans une portion de passage interne débouchante 6 de l'ouverture d'entrée ou d'au moins une des ouvertures d'entrée 4 et comprenant, d'une part, un corps annulaire 7 associé à une bague de renfort 8 sensiblement rigide et pourvu d'une lèvre radiale 7' réalisant une étanchéité contre la face interne de la portion de passage 6, d'autre part, une bague d'étanchéité 9 réalisée en un matériau à faible coefficient de friction, portée par le corps d'étanchéité annulaire 7 et destinée à venir en appui étanche sur la surface extérieure du boisseau 2, et, enfin, un moyen de précontrainte élastique 10 sollicitant axialement le corps d'étanchéité annulaire 7 en direction du boisseau 2, l'ensemble structurel formé par le corps d'étanchéité annulaire 7 et la bague d'étanchéité 9 étant arrangé avec faculté de coulissement guidé dans la portion de passage débouchante 6 de l'ouverture 4 concernée.

Ce dispositif d'étanchéité 5 est ainsi monté dans une structure de siège, sous forme d'épaulements annulaires concentriques, constituée par ladite portion de passage interne débouchante 6. Cette configuration de ladite portion de passage 6 permet de loger les composantes du dispositif d'étanchéité 5 sans réduire sensiblement le diamètre de passage de l'ouverture d'entrée 4 (pas de perte de charge en position ouverte du boisseau - diamètres de passage sensiblement identiques pour l'ouverture 4, le dispositif 5 et l'ouverture du boisseau 2) et en fournissant un appui pour le moyen 10 de précontrainte élastique.

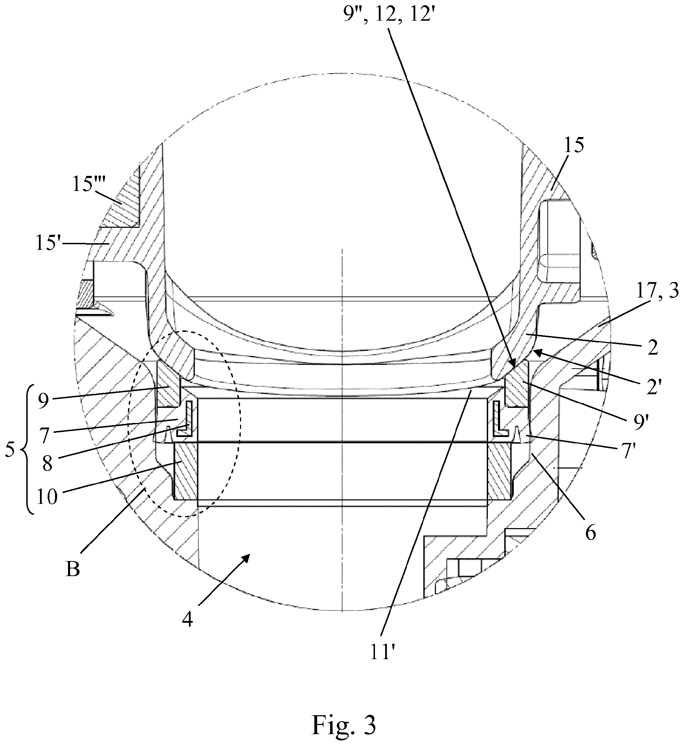

Conformément à l'invention et comme le montrent plus précisément les figures 3 à 6 des dessins annexés, la bague d'étanchéité 9 présente une largeur la1 inférieure à celle la2 du corps d'étanchéité annulaire 7 et est disposée sur ce dernier avec un décalage radial maximal vers l'extérieur (compte tenu de la configuration locale d'implantation), et en étant proéminente en direction du boisseau 2, entraînant un déport vers la périphérie de la zone d'étanchéité dynamique LI entre la bague 9 et le boisseau 2.

Grâce à ces dispositions spécifiques entraînant un décalage vers la périphérie de la zone d'étanchéité dynamique LI c'est-à-dire vers le bord interne 6' de la portion de passage 6 de l'ouverture 4, on aboutit à une réduction de la force de poussée F exercée sur la bague d'étanchéité 9, tout en autorisant un maintien suffisant de cette dernière par le corps d'étanchéité 7 (épaulement 11 avec aile de maintien interne 11').

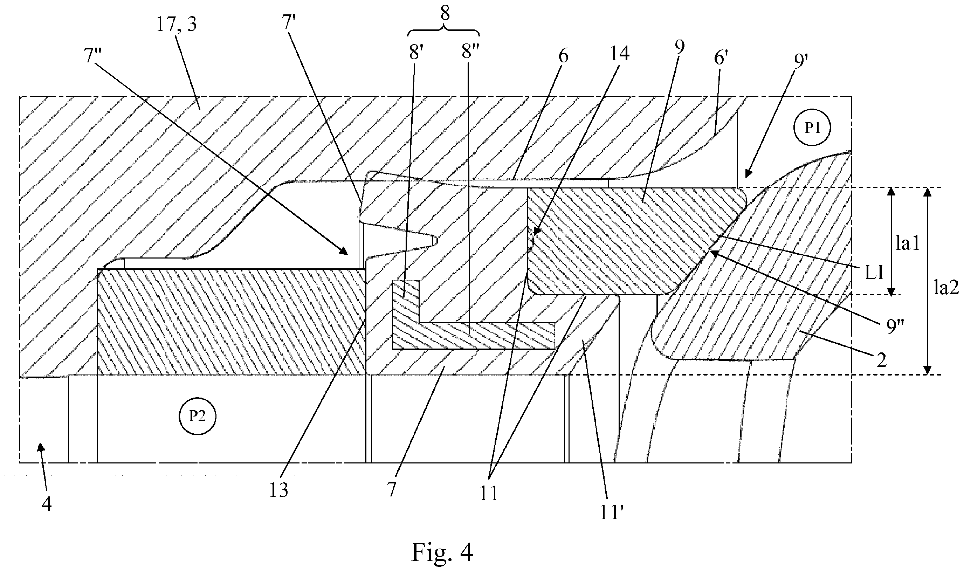

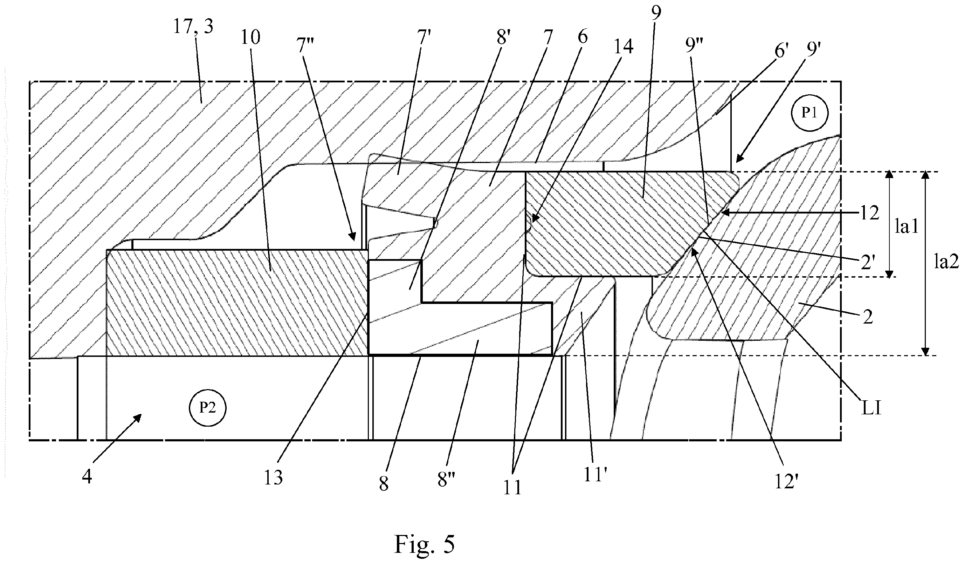

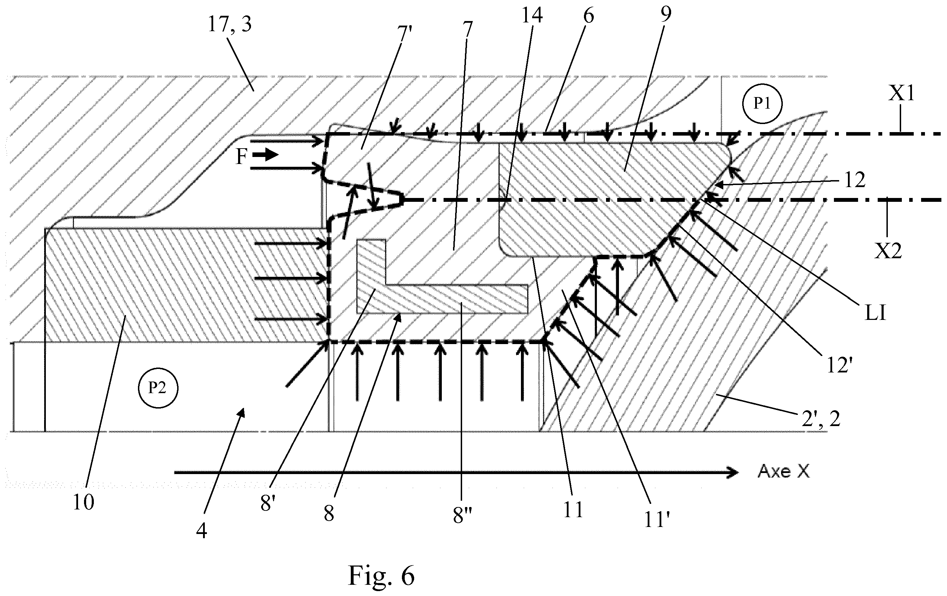

En effet, comme l'illustre la figure 6, en relation avec les figures 4 et 5, les pressions de fluide présentes, d'une part, à l'entrée et dans la portion de passage 6 (P2 : pression amont) et, d'autre part, à la sortie de la portion de passage 6 et dans la chambre 3' (P1 : pression aval) génèrent des contraintes sur l'ensemble corps 7/bague 9 au niveau des surfaces exposées auxdites pressions.

La figure 6 illustre schématiquement les deux types de forces de pression en présence au niveau du dispositif d'étanchéité 5, à savoir la pression de fluide amont P2 (flèches de plus grande longueur) et la pression de fluide aval P1 (flèches de plus faible longueur), avec P2 > P1 du fait du sens d'écoulement du fluide à travers la vanne 1.

Compte tenu des dispositions selon l'invention et du déport radial maximum vers l'extérieur de la bague 9 et donc de la zone d'étanchéité dynamique LI, seuls les efforts générés par la pression amont P2 s'appliquant sur la zone de la face arrière 7" du corps 7 située entre les axes X1 et X2 de la figure 6 génèrent effectivement une composante de force de poussée axiale F en direction du boisseau 2, les composantes selon cet axe des autres efforts résultant de la pression s'annulant mutuellement.

Cette force de poussée axiale F consiste, par conséquent, en une force résultante différentielle, dirigée selon l'axe X de la portion de passage 6, à laquelle s'ajoute la force de poussée produite par le moyen 10 (de valeur minime par rapport à F).

On notera également que le déport vers l'extérieur de la bague 9 permet de réaliser un boisseau 2 avec une ouverture maximale.

En accord avec un mode de réalisation pratique avantageux, illustré notamment aux figures 3 à 6, la bague d'étanchéité 9 peut être disposée sur la périphérie extérieure du corps 7 (en étant rapportée par surmoulage ou par montage mécanique préférentiellement sous tension et avec solidarisation adhésive), préférentiellement dans un épaulement ou un décrochement périphérique circonférentiel extérieur 11 du corps d'étanchéité annulaire 7, en étant proéminente en direction du boisseau 2.

Selon une variante de réalisation préférée de l'invention, la bague d'étanchéité 9 présente en section une extrémité libre 9' en biseau fournissant une surface 9" de contact potentiel avec le boisseau 2 de forme tronconique, la zone d'étanchéité dynamique LI (linéaire ou en forme de bande) entre la bague d'étanchéité 9 et le boisseau 2 étant située entre les bords externe et interne du biseau, et donc entre les limites circulaires externe et interne de ladite surface de contact potentiel 9".

Ainsi, la zone LI (soit linéaire circulaire, soit surfacique annulaire) correspond à la limite séparant la zone de contact extérieure 12 entre 2 et 9 (soumise à la pression P1) d'avec la zone de contact intérieure 12' entre 2 et 9 (soumise à la pression P2).

La surface de contact potentiel 9" peut présenter une configuration plane ou incurvée concave.

Ainsi, la zone LI peut théoriquement présenter une constitution linéaire (surface plane en contact avec une surface sphérique). Néanmoins, compte tenu de la déformation au moins minime de la bague d'étanchéité 9 au niveau de la surface 9" et des phénomènes d'usure, ladite zone LI correspond généralement dans la pratique à une bande annulaire, éventuellement de largeur variable.

En accord avec une caractéristique de l'invention ressortant notamment des figures 3 à 9, le moyen de précontrainte élastique 10 consiste en un ressort de compression venant en appui sous pression (au niveau d'une zone d'appui 13) contre la face arrière 7" du corps d'étanchéité annulaire 7, opposée à la face portant la bague d'étanchéité 9, la force de poussé produite par ledit ressort 10 étant transmise à ladite bague d'étanchéité 9 par l'intermédiaire du corps d'étanchéité annulaire 7.

La force de poussée fournie par le ressort 10 est généralement faible, voire négligeable par rapport à la force de poussée F générée par la différence de pressions du fluide présent dans la portion de passage 6 et la chambre 3', cette force F étant également transmise par l'intermédiaire du corps 7 à la bague 9.

Comme le montrent les figures 3 à 5, la zone d'appui 13 du ressort de compression 10 au niveau de la face arrière 7" du corps d'étanchéité annulaire 7 est avantageusement décalée radialement vers l'intérieur par rapport à la bague d'étanchéité 9, la bague de renfort 8 participant avantageusement à la transmission, vers ladite bague 9 et à travers le corps 7, de la force de poussée produite par ledit ressort 10.

Cette bague de renfort 8 forme un contre-appui et assure un montage avec une contrainte déterminée de l'ensemble corps 7/bague 9 dans la portion de passage 6, en autorisant un maintien avec faculté de coulissement de cet ensemble dans cette portion 6, tout en garantissant la réalisation de l'étanchéité au niveau de la lèvre radiale 7'.

En accord avec un premier mode de réalisation avantageux, illustré aux figures 2, 3, 4 et 6, la bague de renfort 8 à structure rigide, préférentiellement métallique, présente en section transversale une forme de L, avec une aile radiale 8' et une aile axiale 8", et est sensiblement entièrement intégrée dans le corps d'étanchéité annulaire 7, en tant qu'insert surmoulé (à l'exception éventuellement de zones locales de maintien de la bague 8 dans le moule lors du surmoulage), l'aile radiale 8' étant préférentiellement située en regard du moyen de précontrainte élastique 10.

En accord avec un second mode de réalisation, illustré à la figure 5, la bague de renfort 8 à structure rigide, préférentiellement métallique, présente en section transversale une forme de L, avec une aile radiale 8' et une aile axiale 8", et est rapportée sur la face interne du corps d'étanchéité annulaire 7 (par exemple : solidarisation par collage ou surmoulage latéral du corps 7), l'aile radiale 8' étant préférentiellement en contact avec le moyen de précontrainte élastique 10.

Ainsi, en plus des fonctions mentionnées précédemment, la bague de renfort 8 assure également une rigidification de l'aile 11' du corps 7 qui assure le maintien latéral interne de la bague 9, ainsi qu'une rigidification de la partie du corps 7 transmettant la force de poussée produite par le ressort 10 vers cette bague 9.

Afin d'éviter toute fuite entre ces deux composantes 7 et 9, l'ensemble structurel formé par le corps d'étanchéité annulaire 7 et la bague d'étanchéité 9 présente au moins une zone d'étanchéité statique 14 entre ses deux composantes constitutives 7 et 9, préférentiellement située dans un plan perpendiculaire à la direction de poussée du moyen de précontrainte élastique 10 et de la force de poussée F générée par la pression du fluide dans la portion de passage 6.

La bague 9 peut consister en une partie ou pièce séparée rapportée par assemblage mécanique, avec ou sans solidarisation (par exemple par collage), ou être surmoulée sur le corps 7.

Conformément à une autre caractéristique avantageuse de l'invention, et comme le montrent à titre d'exemples les figures 3 à 6, la lèvre radiale 7' du corps d'étanchéité annulaire 7 est située au niveau de la face arrière 7" dudit corps 7 et est réalisée par segmentation partielle (avec formation d'une rainure) d'une bande périphérique extérieure du matériau constitutif de ce dernier, de manière à former une jupe déformable élastiquement, inclinée et proéminente vers l'extérieur en l'absence de contrainte.

Le montage du boisseau 2 dans le corps de vanne creux 3 peut être réalisé de différentes manières.

En accord avec un mode de réalisation avantageux de l'invention, illustré notamment aux figures 1, 2 et 4, le boisseau 2 comporte deux portions d'arbre ou de manchon 15, 15', formées sur deux côtés extérieurs opposés dudit boisseau 2 et alignées entre elles pour former l'axe de pivotement de ce dernier, l'une 15' desdites portions étant reliée à un arbre d'entraînement 16 par une liaison mécanique par emboîtement réalisant un assujettissement en rotation et autorisant au moins un faible mésalignement par inclinaison entre l'axe de pivotement du boisseau 2 et l'axe de rotation dudit arbre d'entraînement 16, à la manière d'une liaison rotule.

Ainsi, même en cas de mésalignement, une transmission de mouvement entre l'actionneur de commande entraînant l'arbre 16 et le boisseau 2 est possible, sans nécessiter un couple de valeur élevée grâce aux forces de frottement limitées entre la bague 9 et ledit boisseau 2, résultant du déport maximal possible vers l'extérieur (en quasi-appui glissant périphérique extérieur contre la paroi interne de la portion de passage 6) de ladite bague 9.

Cette liaison mécanique non rigide particulière pour la transmission du couple entre l'arbre d'entraînement 16 (lui-même entraîné par un actionneur non représenté sur les figures annexés) et le boisseau 2 peut, par exemple, être réalisée en prévoyant un arbre d'entraînement 16 à section polygonale (par exemple hexagonale ou carrée) avec une extrémité d'emboîtement 16' séparée du corps de l'arbre 16 par une portion de section réduite 16", formant rainure circonférentielle.

Le corps de vanne 3, généralement réalisé en un matériau thermoplastique, ou éventuellement en alliage métallique, est composé d'au moins deux parties produites séparément et assemblées entre elles.

Avantageusement, et comme cela ressort notamment des figures 1 et 2, le corps de vanne 3 est constitué de deux parties constitutives 17, 17' assemblées entre elles, à savoir une partie de base 17 comportant ladite au moins une ouverture d'entrée 4 et une partie de couvercle 17' comportant ladite au moins une ouverture de sortie 4'. Ladite partie de base 17 est pourvue de deux renfoncements opposés 18, 18' dans lesquels sont montés par emboîtement des structures complémentaires 19, 19' de palier de montage et/ou de guidage en rotation, destinées à recevoir les portions d'arbre ou de manchon opposées 15, 15' du boisseau 2, directement ou avec interposition d'une bague de glissement 15".

Comme l'illustrent à titre d'exemple avantageux les figures 2A et 2B, la portion d'arbre 15 non entraînée assure un montage rotatoire d'un côté du boisseau 2 dans une structure 19 de palier de guidage en rotation, ce avec interposition d'une bague de glissement 15".

La portion de manchon 15' du boisseau 2, opposée à la portion d'arbre 15 et entraînée en rotation par l'arbre d'entraînement 16, est quant à elle pourvue d'un insert (par exemple métallique) formant douille 15"', dans lequel s'emboîte l'extrémité 16' (la douille 15"' présentant une section intérieure polygonale complémentaire de celle de l'extrémité 16').

Ce montage en rotation du boisseau 2 du côté du manchon creux 15' est réalisé par l'intermédiaire de l'arbre 16 lui-même, qui forme ainsi arbre support et d'entraînement (l'arbre 16 étant monté dans un palier de guidage en rotation - cf. figures 2A et 2B).

Chacune des ouvertures 4 et 4' est, de manière connue, prolongée vers l'extérieur sous la forme d'un embout ou d'une portion de conduit formé(e) d'un seul tenant avec l'une des parties 17, 17' du corps de vanne 3.

A titre d'exemple, les parties 17 et 17', ainsi que le boisseau 2 peuvent être réalisés par moulage d'un matériau thermoplastique (par exemple du polyamide pour les parties 17 et 17' et du PPS (polyphénylène sulfide) pour le boisseau 2). Le corps 7 est avantageusement réalisé en EPDM ou en HNBR et la bague 9 en PTFE. Le ressort 10, quant à lui, peut se présenter sous la forme d'un ressort à vague en acier inoxydable, et la bague de renfort 8 en tôle d'acier, en aluminium ou en thermoplastique. La bague 9 peut comporter un corps en matériau thermoplastique recouvert, au niveau du biseau, d'une feuille en PTFE.

La vanne à boisseau rotatif selon l'invention peut être déclinée selon différentes variantes constructives tant au niveau de la forme du boisseau 2 que du nombre d'ouvertures d'entrée 4 et de sortie 4'.

Dans toute les variantes de réalisation de l'invention néanmoins, au moins l'une des ouvertures d'entrée, préférentiellement toutes les ouvertures d'entrée, comporte(nt) un dispositif d'étanchéité composite 5, comme décrit précédemment.

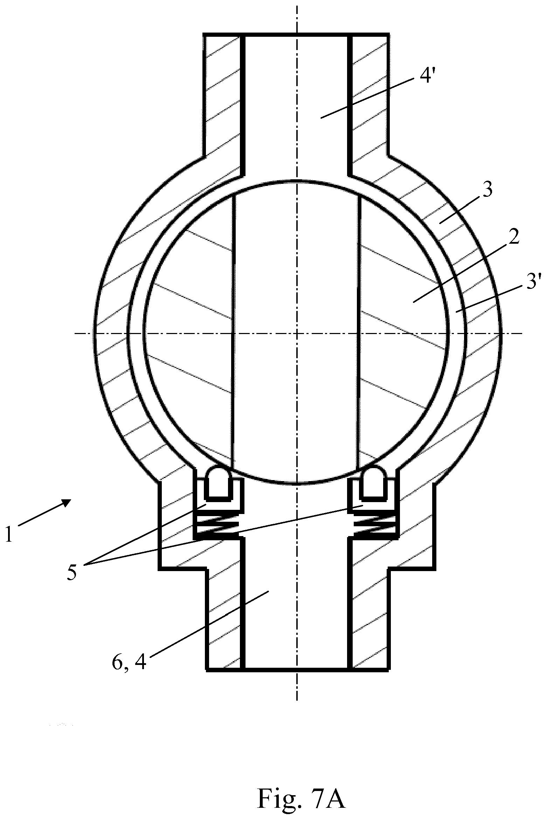

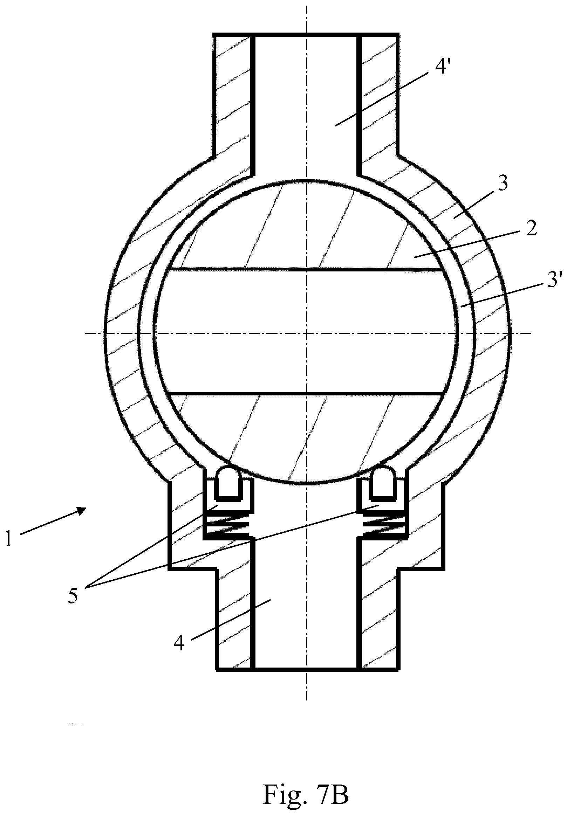

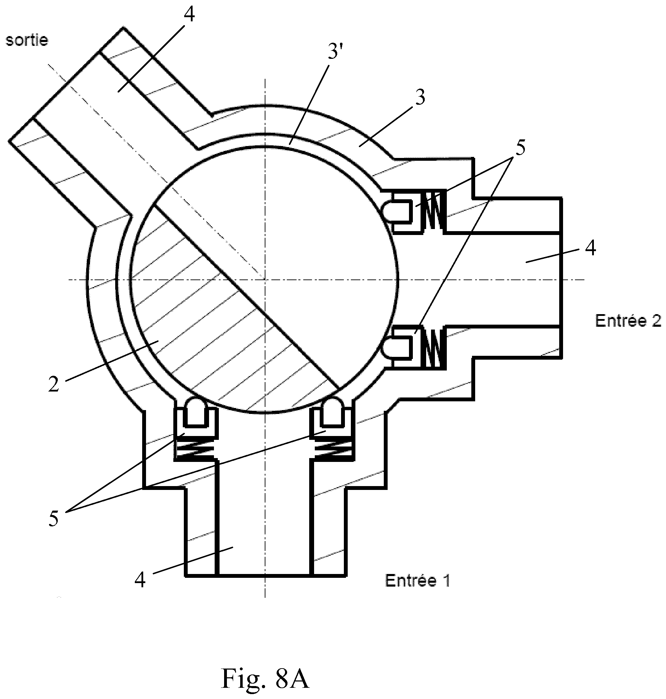

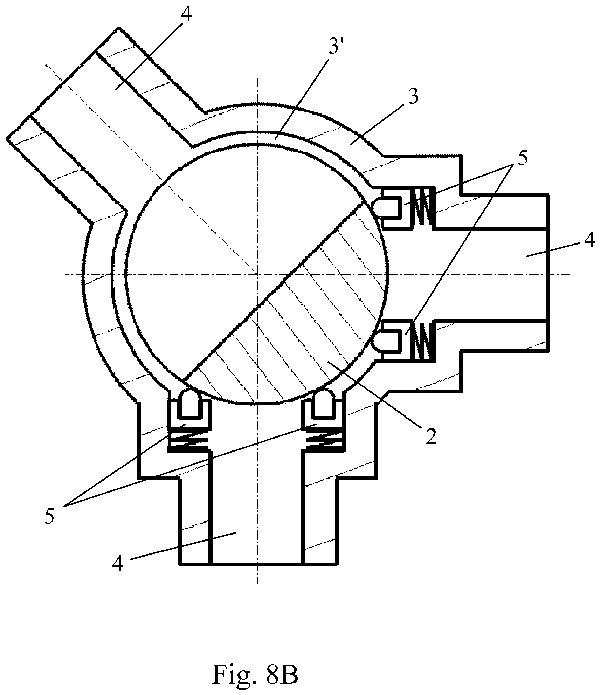

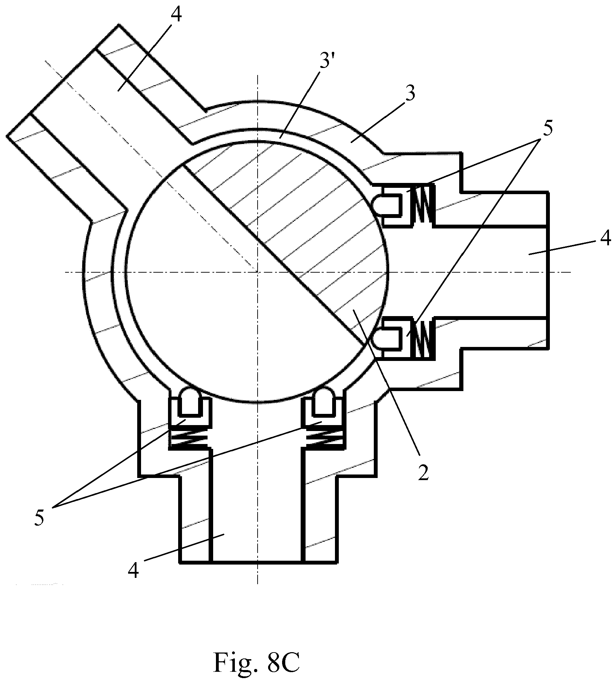

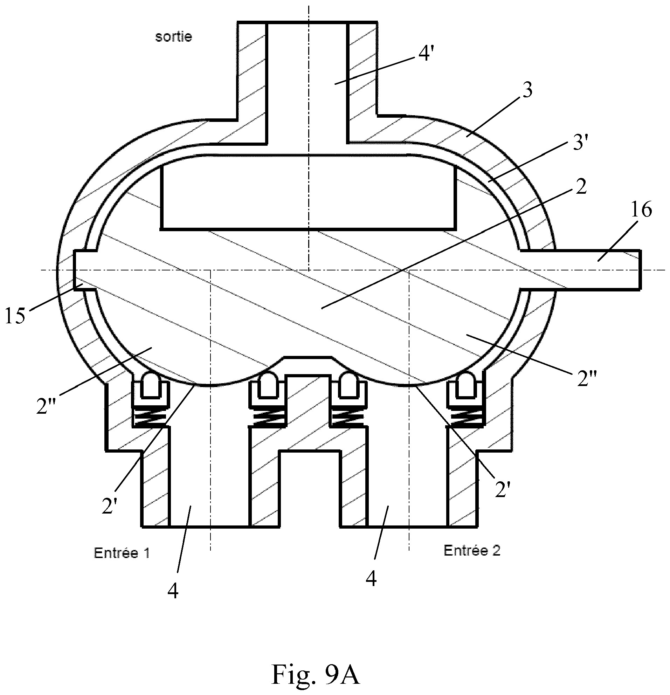

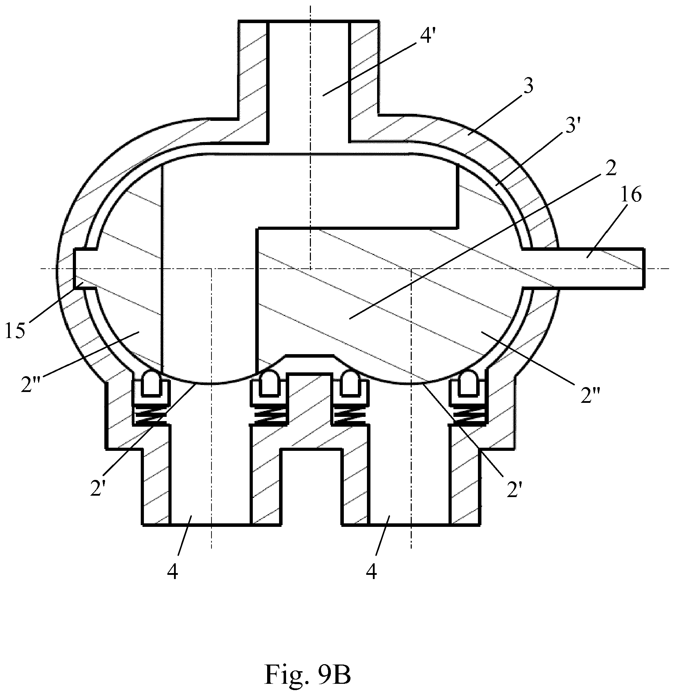

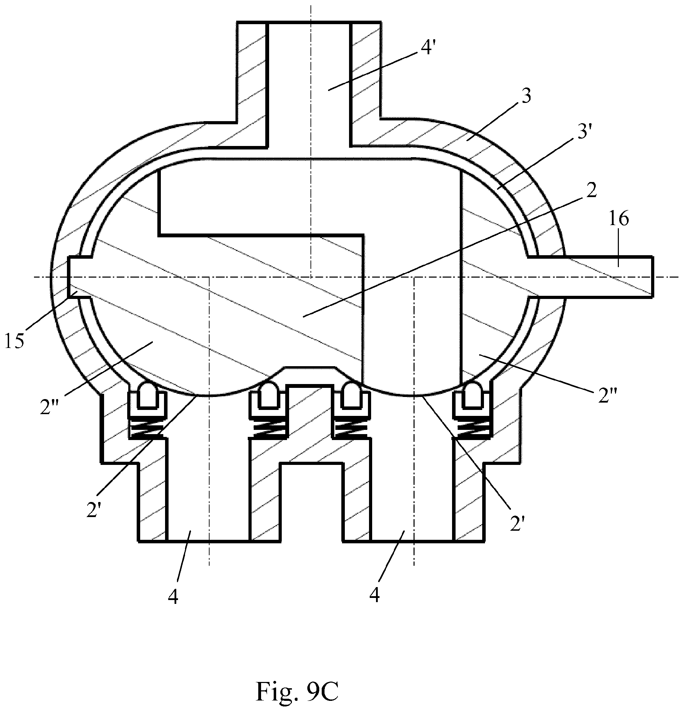

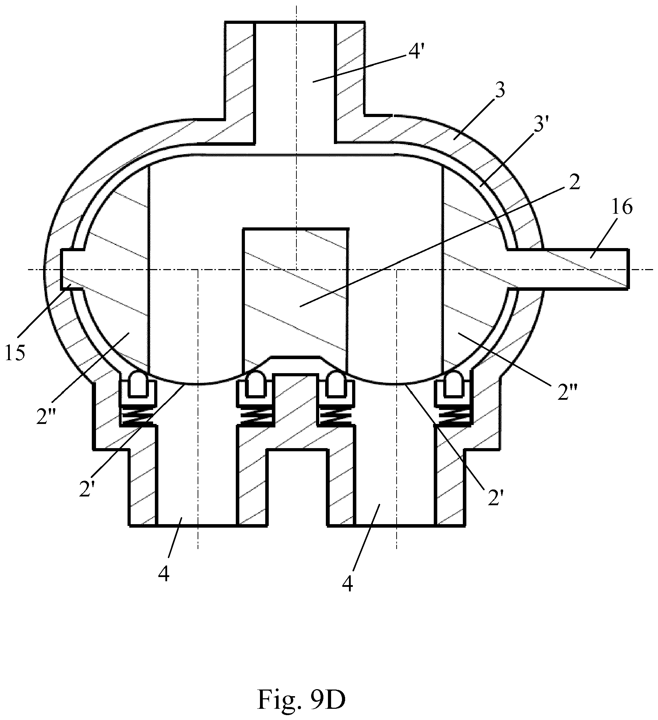

Dans le cadre des différentes variantes constructives, il peut notamment être prévu que :
- le boisseau 2 soit un boisseau sphérique, ladite vanne 1 présentant une ou deux ouverture(s) d'entrée 4 et une ouverture de sortie 4' (figures 7 et 8) ;
- le boisseau 2 soit un boisseau double comportant deux corps 2" à surface extérieure au moins partiellement sphérique, par exemple reliés entre eux par une portion cylindrique, ladite vanne 1 présentant deux ouvertures d'entrée 4 et une ouverture de sortie 4', et ledit boisseau 2 étant configuré pour relier chacune des entrées 4 à la sortie 4', séparément et/ou simultanément (figures 9).

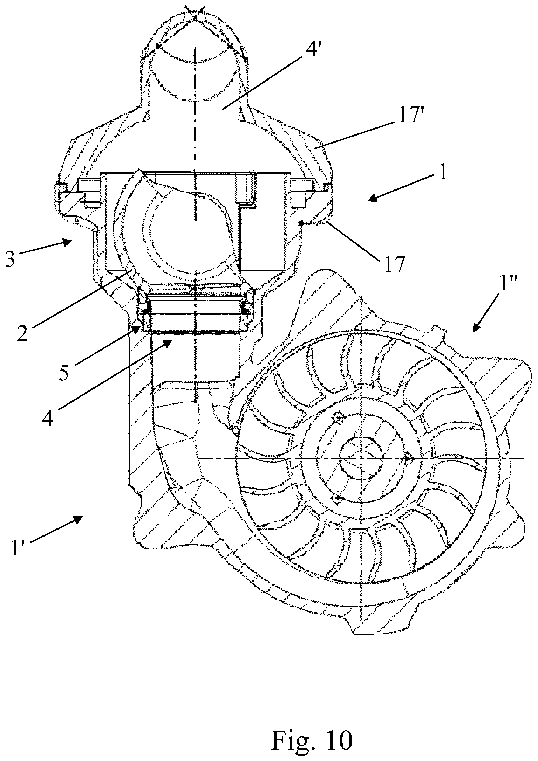

En relation avec une application préférée de la vanne à boisseau selon l'invention, et comme représenté à titre d'exemple sur la figure 10, ladite vanne 1 peut être intégrée structurellement à un module fonctionnel et structurel l'en étant montée en aval d'une pompe à eau 1" également incorporée audit module l', et/ou être montée (de manière intégrée ou indépendante) dans un circuit de circulation de fluide de refroidissement d'un moteur à combustion interne.

Enfin, l'invention a également pour objet un procédé de fabrication d'une vanne 1 à boisseau rotatif 2 telle que décrite précédemment.

Ce procédé peut, par exemple, consister (voir figures 1 et 2) :
- à fournir une partie de base 17 avec au moins une ouverture d'entrée 4,
- à fournir et à mettre en place successivement, dans la portion de passage débouchante 6 de l'ouverture ou de chaque ouverture d'entrée 4 de la partie de base 17, un ressort de compression 10 formant moyen de précontrainte élastique, un corps d'étanchéité annulaire 7 et une bague d'étanchéité 9, cette dernière étant éventuellement formée ou rapportée préalablement sur ledit corps d'étanchéité annulaire 7, de manière à constituer un ou des dispositif(s) d'étanchéité composite(s) 5,

- puis à fournir et à préassembler un sous-ensemble formé d'un boisseau 2 et deux structures de palier 19, 19' associées à des portions opposées d'arbre ou de manchon 15, 15' dudit boisseau 2, éventuellement avec interposition d'une bague de glissement 15",
- à monter ensuite ledit sous-ensemble préassemblé dans la partie de base 17 avec emboîtement des structures de palier 19, 19' dans des renfoncements de réception respectivement adaptés 18, 18', ménagés dans la paroi de ladite partie de base 17, et, enfin,
- à fournir une partie de couvercle 17' avec au moins une ouverture de sortie 4' et à l'assembler de manière étanche avec la partie de base 17 en verrouillant l'emboîtement des structures de palier 19, 19' dans les renfoncements de réception 18, 18' correspondants et en comprimant au moins légèrement le ou les dispositif(s) d'étanchéité composite(s) 5.

On note sur les figures 2A et 2B, en relation avec la figure 1, que la structure de palier 19' ne sert qu'au montage du sous-ensemble 2, 19, 19' par emboîtement vertical dans la partie basse 17, le manchon 15' n'étant pas guidé en rotation par ladite structure 19', mais par l'arbre 16 (liaison rotule à débattement limité et à entraînement).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention qui est seulement défini par les revendications.

## Revendications

1. Vanne **(1)** à boisseau rotatif **(2),** comprenant un corps de vanne creux **(3),** muni d'au moins une ouverture d'entrée **(4)** et d'au moins une ouverture de sortie **(4')** et définissant une chambre de réception **(3')** pour le boisseau, ce dernier présentant une surface extérieure sphérique, au moins au niveau de la ou des portion(s) **(2')** de surface extérieure venant en regard de la ou des ouverture(s) d'entrée **(4)** dans l'une quelconque des positions rotatoires possibles dudit boisseau **(2),**
ladite vanne **(1)** comportant également au moins un dispositif d'étanchéité composite **(5),** installé coaxialement dans une portion de passage interne **(6)** débouchante de l'ouverture d'entrée **(4)** ou d'au moins une des ouvertures d'entrée **(4),** et comprenant, d'une part, un corps annulaire **(7)** associé à une bague de renfort **(8)** sensiblement rigide et pourvu d'une lèvre radiale **(7')** réalisant une étanchéité contre la face interne de la portion de passage **(6),** d'autre part, une bague d'étanchéité **(9)** réalisée en un matériau à faible coefficient de friction, portée par le corps d'étanchéité annulaire (7) et destinée à venir en appui étanche sur la surface extérieure du boisseau (2), et, enfin, un moyen de précontrainte élastique (10) sollicitant axialement le corps d'étanchéité annulaire (7) en direction du boisseau, l'ensemble structurel formé par le corps d'étanchéité annulaire (7) et la bague d'étanchéité (9) étant arrangé avec faculté de coulissement guidé dans la portion de passage débouchante de l'ouverture (4) concernée, la bague d'étanchéité (9) présentant une largeur (lal) inférieure à celle (la2) du corps d'étanchéité annulaire (7) et étant disposée en étant proéminente en direction du boisseau (2),
vanne **caractérisée en ce que** la bague d'étanchéité est disposée sur le corps d'étanchéité annulaire (7) avec un décalage radial vers l'extérieur, dans un épaulement ou un décrochement périphérique circonférentiel extérieur (11) du corps d'étanchéité annulaire (7), entraînant un déport vers le bord interne (6') de la portion de passage (6) de l'ouverture (4) d'une zone d'étanchéité dynamique (LI) entre la bague d'étanchéité (9) et le boisseau (2).

2. Vanne selon la revendication 1, **caractérisée en ce que** la bague d'étanchéité (9) présente en section une extrémité libre (9') en biseau fournissant une surface (9") de contact potentiel avec le boisseau (2) de forme tronconique, la zone d'étanchéité dynamique (LI) entre la bague d'étanchéité (9) et le boisseau (2) étant située entre les bords externe et interne du biseau, et donc entre les limites circulaires externe et interne de ladite surface de contact potentiel (9").

3. Vanne selon l'une quelconque des revendications 1 et 2, **caractérisée en ce que** le moyen de précontrainte élastique (10) consiste en un ressort de compression venant en appui sous pression contre la face arrière (7") du corps d'étanchéité annulaire (7), opposée à la face portant la bague d'étanchéité (9), la force de poussé produite par ledit ressort (10) étant transmise à ladite bague d'étanchéité (9) par l'intermédiaire du corps d'étanchéité annulaire (7).

4. Vanne selon la revendication 3, **caractérisée en ce que** la zone d'appui (13) du ressort de compression (10) au niveau de la face arrière (7") du corps d'étanchéité annulaire (7) est décalée radialement vers l'intérieur par rapport à la bague d'étanchéité (9), la bague de renfort (8) participant avantageusement à la transmission, vers ladite bague (9) et à travers le corps (7), de la force de poussée produite par ledit ressort (10).

5. Vanne selon l'une quelconque des revendications 1 à 4, **caractérisée en ce que** la bague de renfort (8) à structure rigide, préférentiellement métallique, présente en section transversale une forme de L, avec une aile radiale (8') et une aile axiale (8"), et est entièrement intégrée dans le corps d'étanchéité annulaire (7), en tant qu'insert surmoulé, l'aile radiale (8') étant préférentiellement située en regard du moyen de précontrainte élastique (10).

6. Vanne selon l'une quelconque des revendications 1 à 4, **caractérisée en ce que** la bague de renfort (8) à structure rigide, préférentiellement métallique, présente en section transversale une forme de L, avec une aile radiale (8') et une aile axiale (8"), et est rapportée sur la face interne du corps d'étanchéité annulaire (7), l'aile radiale (8') étant préférentiellement en contact avec le moyen de précontrainte élastique (10).

7. Vanne selon l'une quelconque des revendications 1 à 6, **caractérisée en ce que** l'ensemble structurel formé par le corps d'étanchéité annulaire (7) et la bague d'étanchéité (9) présente au moins une zone d'étanchéité statique (14) entre ses deux composantes constitutives (7 et 9), préférentiellement située dans un plan perpendiculaire à la direction de poussée du moyen de précontrainte élastique (10) et de la force de poussée (F) générée par la pression du fluide dans la portion de passage (6), ladite bague (9) consistant en une partie rapportée par assemblage mécanique, avec ou sans solidarisation, ou surmoulée sur le corps (7).

8. Vanne selon l'une quelconque des revendications 1 à 7, **caractérisée en ce que** la lèvre radiale (7') du corps d'étanchéité annulaire (7) est située au niveau de la face arrière (7") dudit corps (7) et est réalisée par segmentation partielle d'une bande périphérique extérieure du matériau constitutif de ce dernier, de manière à former une jupe déformable élastiquement, inclinée et proéminente vers l'extérieur en l'absence de contrainte.

9. Vanne selon l'une quelconque des revendications 1 à 8, **caractérisée en ce que** le boisseau (2) comporte deux portions d'arbre ou de manchon (15, 15'), formées sur deux côtés extérieurs opposés dudit boisseau (2) et alignées entre elles pour former l'axe de pivotement de ce dernier, l'une (15') desdites portions étant reliée à un arbre d'entraînement (16) par une liaison mécanique par emboîtement réalisant un assujettissement en rotation et autorisant au moins un faible mésalignement par inclinaison entre l'axe de pivotement du boisseau (2) et l'axe de rotation dudit arbre d'entraînement (16).

10. Vanne selon la revendication 9, **caractérisée en ce que** le corps de vanne (3) est constitué de deux parties constitutives (17, 17') assemblées entre elles, à savoir une partie de base (17) comportant ladite au moins une ouverture d'entrée (4) et une partie de couvercle (17') comportant ladite au moins une ouverture de sortie (4'), et **en ce que** ladite partie de base (17) est pourvue de deux renfoncements opposés (18, 18') dans lesquels sont montés par emboîtement des structures complémentaires (19, 19') de palier de montage et/ou de guidage en rotation, destinées à recevoir les portions d'arbre ou de manchon opposées (15, 15') du boisseau (2), directement ou avec interposition d'une bague de glissement (15").

11. Vanne selon l'une quelconque des revendications 1 à 10, **caractérisée en ce que** le boisseau (2) est un boisseau sphérique, ladite vanne (1) présentant une ou deux ouverture(s) d'entrée (4) et une ouverture de sortie (4').

12. Vanne selon l'une quelconque des revendications 1 à 10, **caractérisée en ce que** le boisseau (2) est un boisseau double comportant deux corps (2") à surface extérieure au moins partiellement sphérique, par exemple reliés entre eux par une portion cylindrique, ladite vanne (1) présentant deux ouvertures d'entrée (4) et une ouverture de sortie (4'), et ledit boisseau (2) étant configuré pour relier chacune des entrées (4) à la sortie (4'), séparément et/ou simultanément.

13. Vanne selon l'une quelconque des revendications 1 à 12, **caractérisée en ce qu'**elle est intégrée structurellement à un module fonctionnel et structurel (1') en étant montée en aval d'une pompe à eau (1") également incorporée audit module (1'), et/ou faisant partie d'un circuit de circulation de fluide de refroidissement d'un moteur à combustion interne.

14. Procédé de fabrication d'une vanne à boisseau rotatif selon la revendication 10, **caractérisé en ce qu'**il consiste :
- à fournir une partie de base (17) avec au moins une ouverture d'entrée (4),
- à fournir et à mettre en place successivement, dans la portion de passage débouchante (6) de l'ouverture ou de chaque ouverture d'entrée (4) de la partie de base (17), un ressort de compression (10) formant moyen de précontrainte élastique, un corps d'étanchéité annulaire (7) et une bague d'étanchéité (9), cette dernière étant éventuellement formée ou rapportée préalablement sur ledit corps d'étanchéité annulaire (7), de manière à constituer un ou des dispositif(s) d'étanchéité composite(s) (5),
- puis à fournir et à préassembler un sous-ensemble formé d'un boisseau (2) et deux structures de palier (19, 19') associées à des portions opposées d'arbre ou de manchon (15, 15') dudit boisseau (2), éventuellement avec interposition d'une bague de glissement (15"),
- à monter ensuite ledit sous-ensemble préassemblé dans la partie de base (17) avec emboîtement des structures de palier (19, 19') dans des renfoncements de réception respectivement adaptés (18, 18'), ménagés dans la paroi de ladite partie de base (17), et, enfin,
- à fournir une partie de couvercle (17') avec au moins une ouverture de sortie (4') et à l'assembler de manière étanche avec la partie de base (17) en verrouillant l'emboîtement des structures de palier (19, 19') dans les renfoncements de réception (18, 18') correspondants et en comprimant au moins légèrement le ou les dispositif(s) d'étanchéité composite(s) (5).

## Patentansprüche

1. Armatur (1) mit drehbarem Absperrkörper (2), umfassend einen hohlen Armaturkörper (3), der mit mindestens einer Eingangsöffnung (4) und mindestens einer Ausgangsöffnung (4') versehen ist und eine Aufnahmekammer (3') für den Absperrkörper definiert, wobei dieser letztgenannte eine sphärische Außenfläche aufweist, wobei mindestens im Bereich des oder der Abschnitte (2') der Außenfläche, die gegenüber der oder den Eingangsöffnungen (4) in einer der möglichen Rotationspositionen des Absperrkörpers (2) zum Liegen kommen, die Armatur (1) auch mindestens eine Verbunddichtungsvorrichtung (5) umfasst, die koaxial in einem durchgehenden inneren Durchgangsabschnitt (6) der Eingangsöffnung (4) oder mindestens einer der Eingangsöffnungen (4) installiert ist, und umfassend einerseits einen ringförmigen Körper (7), der einem im Wesentlichen starren Verstärkungsring (8) zugeordnet ist, der mit einer radialen Lippe (7') versehen ist, die eine Abdichtung gegen die Innenseite des Durchgangsabschnitts (6) verwirklicht, und andererseits einen Dichtungsring (9), der aus einem Material mit geringem Reibbeiwert hergestellt ist, der von dem ringförmigen Dichtungskörper (7) getragen wird und dazu bestimmt ist, dicht an der Außenfläche des Absperrkörpers (2) anzuliegen, und schließlich ein elastisches Vorspannungsmittel (10), das axial den ringförmigen Dichtungskörper (7) in Richtung des Absperrkörpers drückt, wobei die Struktureinheit, die von dem ringförmigen Dichtungskörper (7) und dem Dichtungsring (9) gebildet ist, mit der Möglichkeit des geführten Gleitens in dem durchgehenden Durchgangsabschnitt der betreffenden Öffnung (4) angeordnet ist, wobei der Dichtungsring (9) eine geringere Breite (la1) als jene (la2) des ringförmigen Dichtungskörpers (7) aufweist und in Richtung des Absperrkörpers (2) überragend angeordnet ist, wobei die Armatur **dadurch gekennzeichnet ist, dass** der Dichtungsring auf dem ringförmigen Dichtungskörper (7) mit einem radialen Versatz nach außen in einem Absatz oder einer äußeren Umfangsvertiefung (11) des ringförmigen Dichtungskörpers (7) angeordnet ist, was zu einem Versatz des Durchgangsabschnitts (6) der Öffnung (4) einer dynamischen Dichtungszone (LI) zum inneren Rand (6') hin zwischen dem Dichtungsring (9) und dem Absperrkörper (2) führt.

2. Armatur nach Anspruch 1, **dadurch gekennzeichnet, dass** der Dichtungsring (9) im Querschnitt ein abgeschrägtes freies Ende (9') aufweist, das eine potentielle Kontaktfläche (9") mit dem Absperrkörper (2) von kegelstumpfartiger Form liefert, wobei sich die dynamische Dichtungszone (LI) zwischen dem Dichtungsring (9) und dem Absperrkörper (2) zwischen den äußeren und inneren Rändern der Schräge und somit zwischen den äußeren und inneren kreisförmigen Grenzen der potentiellen Kontaktfläche (9") befindet.

3. Armatur nach einem der Ansprüche 1 und 2, **dadurch gekennzeichnet, dass** das elastische Vorspannungsmittel (10) in einer Kompressionsfeder besteht, die unter Druck an die Rückseite (7") des ringförmigen Dichtungskörpers (7), die der Seite, die den Dichtungsring (9) trägt, gegenüberliegt, angelegt wird, wobei die von der Feder (10) erzeugte Schubkraft auf den Dichtungsring (9) mit Hilfe des ringförmigen Dichtungskörpers (7) übertragen wird.

4. Armatur nach Anspruch 3, **dadurch gekennzeichnet, dass** die Auflagezone (13) der Kompressionsfeder (10) im Bereich der Rückseite (7") des ringförmigen Dichtungskörpers (7) radial nach innen in Bezug zum Dichtungsring (9) versetzt ist, wobei der Verstärkungsring (8) vorteilhafterweise an der Übertragung der von der Feder (10) erzeugten Schubkraft zum Ring (9) und durch den Körper (7) beteiligt ist.

5. Armatur nach einem der Ansprüche 1 bis 4, **dadurch gekennzeichnet, dass** der Verstärkungsring (8) mit starrer Struktur, vorzugsweise metallisch, im Querschnitt eine L-Form mit einem radialen Schenkel (8') und einem axialen Schenkel (8") aufweist und zur Gänze in den ringförmigen Dichtungskörper (7) als aufgeformter Einsatz integriert ist, wobei der radiale Schenkel (8') vorzugsweise gegenüber dem elastischen Vorspannungsmittel (10) angeordnet ist.

6. Armatur nach einem der Ansprüche 1 bis 4, **dadurch gekennzeichnet, dass** der Verstärkungsring (8) mit starrer Struktur, vorzugsweise metallisch, im Querschnitt ein L-Form mit einem radialen Schenkel (8') und einem axialen Schenkel (8") aufweist und auf die Innenseite des ringförmigen Dichtungskörpers (7) aufgesetzt ist, wobei der radiale Schenkel (8') vorzugswiese mit dem elastischen Vorspannungsmittel (10) in Kontakt ist.

7. Armatur nach einem der Ansprüche 1 bis 6, **dadurch gekennzeichnet, dass** die Struktureinheit, die von dem ringförmigen Dichtungskörper (7) und dem Dichtungsring (9) gebildet ist, mindestens eine statische Dichtungszone (14) zwischen ihren beiden Bestandteilen (7 und 9) aufweist, die sich vorzugsweise in einer Ebene senkrecht auf die Schubrichtung des elastischen Vorspannungsmittels (10) und der durch den Druck des Fluids in dem Durchgangsabschnitt (6) erzeugten Schubkraft (F) befindet, wobei der Ring (9) in einem durch mechanische Montage mit oder ohne Verbindung aufgesetzten oder auf den Körper (7) aufgeformten Teil besteht.

8. Armatur nach einem der Ansprüche 1 bis 7, **dadurch gekennzeichnet, dass** die radiale Lippe (7') des ringförmigen Dichtungskörpers (7) im Bereich der Rückseite (7") des Körpers (7) angeordnet und durch Teilsegmentierung eines äußeren Umfangsbandes des diesen bildenden Materials hergestellt ist, um eine elastisch verformbare Schürze zu bilden, die geneigt und nach außen ohne Spannung überragend ist.

9. Armatur nach einem der Ansprüche 1 bis 8, **dadurch gekennzeichnet, dass** der Absperrkörper (2) zwei Wellen- oder Hülsenabschnitte (15, 15') umfasst, die auf zwei gegenüberliegenden Außenseiten des Absperrkörpers (2) gebildet und untereinander ausgerichtet sind, um die Schwenkachse dieses letztgenannten zu bilden, wobei einer (15') der Abschnitte mit einer Antriebswelle (16) durch eine mechanische Verbindung durch Ineinanderstecken verbunden ist, was zu einer Rotationsfestigkeit führt und zumindest eine geringe Fehlausrichtung durch Neigung zwischen der Schwenkachse des Absperrkörpers (2) und der Rotationsachse der Antriebswelle (16) gestattet.

10. Armatur nach Anspruch 9, **dadurch gekennzeichnet, dass** der Armaturkörper (3) von zwei miteinander verbundenen Bestandteilen (17, 17') gebildet ist, nämlich einem Basisteil (17), umfassend die mindestens eine Eingangsöffnung (4), und einem Deckelteil (17'), umfassend die mindestens eine Ausgangsöffnung (4'), und dass der Basisteil (17) mit zwei gegenüberliegenden Verstärkungen versehen (18, 18') versehen ist, in denen durch Ineinanderstecken komplementäre Strukturen (19, 19') eines Montage- und/oder Drehführungslagers montiert sind, die dazu bestimmt sind, die gegenüberliegenden Wellen- oder Hülsenabschnitte (15, 15') des Absperrkörpers (2) direkt oder mit Zwischenfügung eines Gleitrings (15") aufzunehmen.

11. Armatur nach einem der Ansprüche 1 bis 10, **dadurch gekennzeichnet, dass** der Absperrkörper (2) ein sphärische Absperrkörper ist, wobei die Armatur (1) eine oder zwei Eingangsöffnungen (4) und eine Ausgangsöffnung (4') aufweist.

12. Armatur nach einem der Ansprüche 1 bis 10, **dadurch gekennzeichnet, dass** der Absperrkörper (2) ein Doppel-Absperrkörper ist, umfassend zwei Körper (2") mit zumindest teilweise sphärischer Außenfläche, die beispielsweise durch einen zylindrischen Abschnitt miteinander verbunden sind, wobei die Armatur (1) zwei Eingangsöffnungen (4) und eine Ausgangsöffnung (4') aufweist, und wobei der Absperrkörper (2) dazu vorgesehen ist, jeden der Eingänge (4) mit dem Ausgang (4') separat und/oder gleichzeitig zu verbinden.

13. Armatur nach einem der Ansprüche 1 bis 12, **dadurch gekennzeichnet, dass** sie strukturell in ein Funktions- und Strukturmodul (I') integriert ist, wobei sie stromabwärts zu einer Wasserpumpe (I") montiert ist, die ebenfalls in das Modul (I') integriert ist, und/oder Teil einer Kühlfluidzirkulationsschaltung eines Verbrennungsmotors ist.

14. Verfahren zur Herstellung einer Armatur mit drehbarem Absperrkörper nach Anspruch 10, **dadurch gekennzeichnet, dass** es darin besteht:
- einen Basisteil (17) mit mindestens einer Eingangsöffnung (4) bereitzustellen,
- in dem durchgehenden Durchgangsabschnitt (6) der Öffnung oder jeder Eingangsöffnung (4) des Basisteils (17) eine Kompressionsfeder (10), die ein elastisches Vorspannungsmittel bildet, einen ringförmigen Dichtungskörper (7) und einen Dichtungsring (9) nacheinander bereitzustellen und anzuordnen, wobei dieser letztgenannte eventuell vorher auf dem ringförmigen Dichtungskörper (7) ausgebildet oder aufgesetzt ist, um eine oder mehrere Verbunddichtungsvorrichtung(en) (5) darzustellen,
- dann eine Untereinheit bereitzustellen und vorzumontieren, die von einem Absperrkörper (2) und zwei Lagerstrukturen (19, 19') gebildet ist, die gegenüberliegenden Wellen- oder Hülsenabschnitten (15, 15') des Absperrkörpers (2) zugeordnet sind, eventuell mit Zwischenfügung eines Gleitringes (15"),
- sodann die vormontierte Untereinheit in dem Basisteil (17) mit Einstecken der Lagerstrukturen (19, 19') in jeweils angepasste Aufnahmeverstärkungen (18, 18') zu montieren, die in der Wand des Basisteils (17) vorgesehen sind, und schließlich
- einen Deckelteil (17') mit mindestens einer Ausgangsöffnung (4') bereitzustellen und ihn dicht mit dem Basisteil zusammenzufügen, wobei das Ineinanderstecken der Lagerstrukturen (19, 19') in den entsprechenden Aufnahmeverstärkungen (18, 18') verriegelt und die Verbunddichtungsvorrichtung(en) (5) zumindest leicht zusammengedrückt werden.

## Claims

1. A valve (1) with a rotary plug (2), including a hollow valve body (3), provided with at least one inlet opening (4) and with at least one outlet opening (4') and defining a receiving chamber (3') for the plug, the latter having a spherical exterior surface, at least at the level of the portion (s) (2') of the exterior surface coming opposite the inlet opening(s) (4) in any one of the possible rotational positions of said plug (2),
said valve (1) also comprising at least one composite sealing device (5), installed coaxially in a portion of an internal passage (6) emerging from the inlet opening (4) or from at least one of the inlet openings (4), and including, on the one hand, an annular body (7) associated with a reinforcement ring (8) which is substantially rigid and provided with a radial lip (7') creating a seal against the internal face of the passage portion (6), on the other hand, a sealing ring (9) made from a material having a low coefficient of friction, carried by the annular sealing body (7) and intended to come to rest in a sealing manner on the exterior surface of the plug (2), and, finally, an elastic prestressing means (10) axially urging the annular sealing body (7) in the direction of the plug, the structural assembly formed by the annular sealing body (7) and the sealing ring (9) being arranged slidably in a guided manner in the passage portion emerging from the opening (4) concerned, the sealing ring (9) having a width (la1) smaller than that (la2) of the annular sealing body (7) and being disposed protruding in the direction of the plug (2),
valve **characterized in that** the sealing ring is disposed on the annular sealing body (7) with a radial offset towards the exterior, in a shoulder or an exterior circumferential peripheral recess (11) of the annular sealing body (7), bringing about a displacement towards the internal edge (6') of the passage portion (6) of the opening (4) of a dynamic sealing zone (LI) between the sealing ring (9) and the plug (2).

2. The valve according to Claim 1, **characterized in that** the sealing ring (9) has in section a bevelled free end (9') providing a potential contact surface (9") with the plug (2) of frustoconical shape, the dynamic sealing zone (LI) between the sealing ring (9) and the plug (2) being situated between the external and internal edges of the bevel, and therefore between the external and internal circular limits of said potential contact surface (9").

3. The valve according to any one of Claims 1 and 2, **characterized in that** the elastic prestressing means (10) consists in a compression spring coming to rest under pressure against the rear face (7") of the annular sealing body (7), opposite the face carrying the sealing ring (9), the pushing force produced by said spring (10) being transmitted to said sealing ring (9) by means of the annular sealing body (7).

4. The valve according to Claim 3, **characterized in that** the support zone (13) of the compression spring (10) at the level of the rear face (7") of the annular sealing body (7) is offset radially towards the interior with respect to the sealing ring (9), the reinforcement ring (8) advantageously participating in the transmission, towards said ring (9) and through the body (7), of the pushing force produced by said spring (10).

5. The valve according to any one of Claims 1 to 4, **characterized in that** the reinforcement ring (8) with a rigid structure, preferably metallic, has in transverse section an L-shape, with a radial wing (8') and an axial wing (8"), and is entirely integrated in the annular sealing body (7), as an overmoulded insert, the radial wing (8') being preferably situated facing the elastic prestressing means (10).

6. The valve according to any one of Claims 1 to 4, **characterized in that** the reinforcement ring (8) with a rigid structure, preferably metallic, has in transverse section an L-shape, with a radial wing (8') and an axial wing (8"), and is attached to the internal face of the annular sealing body (7), the radial wing (8') being preferably in contact with the elastic prestressing means (10).

7. The valve according to any one of Claims 1 to 6, **characterized in that** the structural assembly formed by the annular sealing body (7) and the sealing ring (9) has at least one static sealing zone (14) between its two constitutive components (7 and 9), preferably situated in a plane perpendicular to the pushing direction of the elastic prestressing means (10) and of the pushing force (F) generated by the pressure of the fluid in the passage portion (6), said ring (9) consisting in a part which is attached by mechanical assembly, with or without integration, or overmoulded on the body (7).

8. The valve according to any one of Claims 1 to 7, **characterized in that** the radial lip (7') of the annular sealing body (7) is situated at the level of the rear face (7") of said body (7) and is realized by partial segmentation of an exterior peripheral strip of the material constituting the latter, so as to form an elastically deformable skirt, inclined and protruding towards the exterior in the absence of stress.

9. The valve according to any one of Claims 1 to 8, **characterized in that** the plug (2) comprises two shaft portions or sleeve portions (15, 15'), formed on two opposite exterior sides of said plug (2) and aligned with respect to one another to form the pivot axis of the latter, one (15') of said portions being connected to a drive shaft (16) by a mechanical link interfitting to realize a securing in rotation and permitting at least a slight misalignment by inclining between the pivot axis of the plug (2) and the rotation axis of said drive shaft (16).

10. The valve according to Claim 9, **characterized in that** the valve body (3) is constituted by two constitutive parts (17, 17') assembled with respect to one another, namely a base part (17) comprising said at least one inlet opening (4) and a cover part (17') comprising said at least one outlet opening (4'), and **in that** said base part (17) is provided with two opposed recesses (18, 18') in which there are mounted, by interfitting, complementary bearing structures (19, 19') for mounting and/or rotational guiding, intended to receive the opposite shaft or sleeve portions (15, 15') of the plug (2), directly or with interposition of a slide ring (15").

11. The valve according to any one of Claims 1 to 10, **characterized in that** the plug (2) is a spherical plug, said valve (1) having one or two inlet opening(s) (4) and one outlet opening (4').

12. The valve according to any one of Claims 1 to 10, **characterized in that** the plug (2) is a double plug comprising two bodies (2") having an at least partially spherical exterior surface, for example connected to one another by a cylindrical portion, said valve (1) having two inlet openings (4) and one outlet opening (4'), and said plug (2) being configured to connect each of the inlets (4) to the outlet (4'), separately and/or simultaneously.

13. The valve according to any one of Claims 1 to 12, **characterized in that** it is integrated structurally to a functional and structural module (1') by being mounted downstream of a water pump (1"), also incorporated into said module (1'), and/or forming part of a cooling fluid circulation circuit of an internal combustion engine.

14. A method for the manufacture of a rotary plug valve according to Claim 10, **characterized in that** it consists in:
- providing a base part (17) with at least one inlet opening (4),
- providing and putting in place successively, in the passage portion (6) emerging from the or from each inlet opening (4) of the base part (17), a compression spring (10) forming an elastic prestressing means, an annular sealing body (7) and a sealing ring (9), the latter possibly being formed or previously added to said annular sealing body (7), so as to constitute one or several composite sealing device(s) (5),
- then providing and pre-assembling a sub-assembly formed by a plug (2) and two bearing structures (19, 19') associated with opposed shaft or sleeve portions (15, 15') of said plug (2), possibly with interposition of a slide ring (15"),
- mounting said pre-assembled sub-assembly in the base part (17) with interfitting of the bearing structures (19, 19') in respectively adapted receiving recesses (18, 18'), arranged in the wall of said base part (17), and, finally,
- providing a cover part (17') with at least one outlet opening (4') and assembling it in a sealed manner with the base part (17) by locking the interfitting of the bearing structures (19, 19') in the corresponding receiving recesses (18, 18') and by compressing at least slightly the composite sealing device(s) (5).
